# EUROPÄISCHE PATENTSCHRIFT

(11) **EP 4 368 871 B1**
(45) Veröffentlichungstag und Bekanntmachung des Hinweises auf die Patenterteilung: **02.07.2025**
(21) Anmeldenummer: 22206738.1
(22) Anmeldetag: 10.11.2022
(51) Int. Cl.: F16M 11/42, B60B 33/06, B62B 5/04

(54) **MOBILER STÄNDER FÜR EINEN ZU HALTENDEN GEGENSTAND**
MOBILE STAND FOR AN OBJECT TO BE HELD
SUPPORT MOBILE POUR UN OBJET À MAINTENIR

(43) Veröffentlichungstag der Anmeldung: 15.05.2024
(60) Teilanmeldung: 24199002.7
(73) Patentinhaber: NerTes GmbH Mobile Ständertechnik, 24983 Handewitt (DE)
(72) Erfinder: Nerger, Jürgen Heinrich Benno, 24983 Handewitt (DE); Teske, Heiko, 24960 Glücksburg (DE)
(74) Vertreter: Seemann & Partner Patentanwälte mbB

(56) Entgegenhaltungen:
- FR-A- 937 594
- JP-U- S55 178 457
- US-A1- 2018 346 008

## Beschreibung

Die Erfindung betrifft einen mobilen Ständer für einen zu haltenden Gegenstand, umfassend einen Rollenträger mit mindestens drei Rollen, die dazu vorgesehen sind auf einem Untergrund abzurollen, so dass der Ständer mobil ist, eine Aufnahme, über die der zu haltende Gegenstand mit dem Ständer koppelbar ist, eine Arretierungsvorrichtung, mit der der Rollenträger gegenüber dem Untergrund ortsfest arretierbar ist, wobei die Arretierungsvorrichtung mit einer Betätigungsvorrichtung verbunden ist, mit der die Arretierungsvorrichtung reversibel zwischen einer Arretierungs-Stellung und einer gelösten Stellung bewegt werden kann.

Ein mobiler Ständer ist beispielsweise aus der EP 1 571 277 A1 oder aus der EP 2 565 350 A1 bekannt.

Der aus der EP 1 571 277 A1 bekannte mobile Ständer weist eine hohe Standfestigkeit und Stabilität auf, gleichzeitig ist die Verletzungsgefahr sehr gering. Der mobile Ständer zeichnet sich dadurch aus, dass mittels einer an einer Hebeeinrichtung angeordneten Betätigungsstange eine Relativbewegung zwischen einem Standfuß und einem Rollenträger bewirkt wird, wobei durch diese Bewegung ein Abstand zwischen dem Rollenträger und dem Standfuß verändert wird. Zum ortsfesten Abstellen des mobilen Ständers in einer Standstellung wird der Standfuß auf einen Untergrund abgesenkt. In einer Fahrstellung wird der Standfuß vom Untergrund angehoben.

Ein solcher mobiler Ständer weist vielfach ein hohes Eigengewicht auf, welches bis zu 150 kg betragen kann. Dieses hohe Gewicht verleiht dem mobilen Ständer einen stabilen Stand. Gleichzeitig wirkt es jedoch auch auf den Standfuß, die Hebeeinrichtung und den Rollenträger. Beim Anheben des Rollenträgers, was zu einem gleichzeitigen Absenken des Standfußes führt, treten an der Hebeeinrichtung aufgrund des hohen Gewichtes auch hohe Drehmomente auf. Diese können dazu führen, dass die zur Betätigung der Hebeeinrichtung eingesetzte Betätigungsstange, die auch als Schubstange für den Ständer dient, in Richtung eines von dem Ständer gehaltenen Mastes, beispielsweise eines Sonnenschirms, beschleunigt wird. Wird die Betätigungsstange nicht stets sicher und mit einer gewissen Kraft geführt, so besteht das Risiko, dass bei einer solchen nicht vorgesehenen Handhabung des Ständers, die Betätigungsstange aus der Hand gleitet.

Aus diesem Grund umfasst der aus der EP 2 565 350 A1 bekannte mobile Ständer eine Kraftunterstützungseinrichtung, die beispielsweise in Form einer Zugfeder ausgeführt ist. Eine solche Zugfeder wirkt der Schwenkbewegung der Betätigungsstange, genauer dem auf die Betätigungsstange wirkenden Drehmoment, zumindest teilweise entgegen. Mit anderen Worten wird das aufgrund des hohen Gewichts des Standfußes auf die Betätigungsstange der Hebeeinrichtung wirkende Drehmoment durch die eingesetzte Kraftunterstützungseinrichtung zumindest teilweise kompensiert.

Sowohl bei dem aus der EP 1 571 277 A1 als auch bei dem aus der EP 2 565 350 A1 bekannten mobilen Ständer muss zum Anheben des Standfußes eine relativ große Kraft aufgewendet werden, da der Standfuß ein verhältnismäßig hohes Gewicht aufweist.

Ein weiterer mobiler Ständer für einen zu haltenden Gegenstand ist aus EP 3 358 109 B1 bekannt. Dieser umfasst ein Standelement zum ortsfesten Aufstellen des Ständers auf einem Untergrund in einer Standstellung, einen Rollenträger mit mindestens drei Rollen, die dazu vorgesehen sind, in einer Fahrstellung auf dem Untergrund abzurollen, so dass der Ständer mobil ist, eine Aufnahme, über die der zu haltende Gegenstand mit dem Ständer koppelbar ist, und eine Betätigungsvorrichtung, mit der das Standelement zwischen der Standstellung und der Fahrstellung verschoben werden kann. Bei diesem mobilen Ständer ist die Aufnahme auf dem Rollenträger befestigt. Dadurch ist der Wechsel zwischen der Standstellung und der Fahrstellung des mobilen Ständers weniger anstrengend als bei den zuvor beschriebenen mobilen Ständern, da das Gewicht des zu haltenden Gegenstands nicht auch angehoben werden muss.

Die zuvor beschriebenen mobilen Ständer werden bis zu einem Ständergewicht von 150 kg eingesetzt. Bei noch schwereren Ständern werden die zu hebenden Lasten so groß, dass dies nicht mehr praktikabel ist.

Weiter offenbart US 2018/0346008 A1 ein mechanisches System zur Bodenstabilisierung für Fahrzeuge auf Rollen, z. B. für ein in einem Operationssaal verwendeten chirurgischen Assistenzroboter. Das Stabilisierungssystem umfasst schwenkbare Stützfüße, bewegbar zwischen einer eingefahrenen Position in einem Abstand vom Boden und einer Kontaktposition, die die Immobilisierung des Fahrzeugs durch mechanische Reibung gegen den Boden sicherstellt.

Aus FR 937 594 A ist eine Vorrichtung bekannt, die das Umkippen von Kinderwagen oder ähnlichen Fahrzeugen verhindern soll, wenn sie angehalten sind. Dazu ist das Fahrzeug nach vorne und hinten über das Fahrzeug hinausragenden Armen ausgestattet, die aus einer in etwas waagerechten Position in eine schräge Position mit Bodenkontakt vor und hinter dem Fahrzeug verschwenkbar sind, um die effektive Länge der Stützbasis des Fahrzeugs zu vergrößern.

Ferner offenbart JP S55 178457 U einen Handwagen zur Bedienung an Bord von Flugzeugen oder in Zügen. Der Handwagen verfügt über einen Bremsmechanismus, der per Hand ver- und entriegelt werden kann. Dieser wirkt auf zwei Bremsarme, die gegenläufig schwenkbar und gegenläufig ausgerichtet sind.

Ausgehend von diesem Stand der Technik ist es eine Aufgabe der vorliegenden Erfindung, einen mobilen Ständer für einen zu halten Gegenstand zur Verfügung zu stellen, der einerseits eine hohe Standfestigkeit aufgrund seines hohen Gewichtes hat, der aber andererseits auch einfach und sicher zu bedienen sein soll
Diese Aufgabe wird gelöst durch einen mobilen Ständer für einen zu haltenden Gegenstand, umfassend einen Rollenträger mit mindestens drei Rollen, die dazu vorgesehen sind auf einem Untergrund abzurollen, so dass der Ständer mobil ist, eine Aufnahme, über die der zu haltende Gegenstand mit dem mobilen Ständer koppelbar ist, eine Arretierungsvorrichtung, mit der der Rollenträger gegenüber dem Untergrund ortsfest arretierbar ist, wobei die Arretierungsvorrichtung mit einer Betätigungsvorrichtung verbunden ist, mit der die Arretierungsvorrichtung reversibel zwischen einer Ruhestellung ohne Untergrundkontakt und einer Arretierstellung mit Untergrundkontakt bewegt werden kann, wobei die Arretierungsvorrichtung ein Paar oder mehrere Paare von längserstreckten Arretierungselementen aufweist und die Arretierungselemente des oder jedes Paares durch Betätigung der Betätigungsvorrichtung zueinander gegenläufig aus der Ruhestellung in die Arretierstellung verschwenkbar sind und in der Arretierstellung im Untergrundkontakt schräg und zueinander gegenläufig ausgerichtet sind, wobei die Betätigungsvorrichtung ein Betätigungselement, insbesondere eine Betätigungsstange, umfasst, die in einer mit dem Rollenträger verbundenen Haltevorrichtung zwischen einer ersten Endposition und einer zweiten Endposition um eine Schwenkachse der Betätigungsvorrichtung schwenkbar gelagert ist, die der Ruhestellung und der Arretierstellung der Arretierungsvorrichtung entsprechen, wobei die Haltevorrichtung ausgebildet ist, einer Bewegung des Betätigungselements aus der ersten Endposition in die zweite Endposition und umgekehrt eine zu überwindende Kraftwirkung entgegenzusetzen, dadurch gekennzeichnet, dass die Betätigungsvorrichtung an der dem Betätigungselement bezüglich der Schwenkachse der Betätigungsvorrichtung gegenüberliegenden Seite ein längserstrecktes Hebelelement mit zwei parallelen und radial zur Schwenkachse der Betätigungsvorrichtung verlaufenden Schenkeln aufweist, welche radial zur Schwenkachse der Betätigungsvorrichtung (14) verlaufende Langlöcher aufweist, in denen ein parallel zur Schwenkachse der Betätigungsvorrichtung ausgerichteter Achsstift verschiebbar gelagert ist, der über eine vorbelastete Spiralfeder mit einem Befestigungspunkt an oder nahe der Schwenkachse der Betätigungsvorrichtung verbunden ist, wobei der Achsstift mit zwei Gleitrollen ausgestattet ist, die auf zwei gleichartig ausgebildeten Abrollkulissen der Haltevorrichtung abrollen, die in den Endpositionen minimale Abstände und in einer Position zwischen den Endpositionen (48, 50) einen maximalen Abstand zum Befestigungspunkt aufweisen.

Diese Lösung bietet den Vorteil eines sicheren Standes bei gleichzeitig sehr leichter Bedienbarkeit. Anders als in den aus dem Stand der Technik bekannten mobilen Ständern muss bei der Umschaltung von der Standstellung zur Fahrstellung das Gewicht des Ständers nicht angehoben werden, sondern es ruht, zusammen mit dem Gewicht des gehaltenen Gegenstands, auf den Rollen des Rollenträgers, die für das entsprechende Gesamtgewicht ausgelegt sind. Die Arretierung erfolgt durch das Verschwenken der Paare längserstreckten Arretierungselemente auf den Boden.

Die besondere Sicherheit dieser Form der Arretierung resultiert aus der Kombination daraus, dass die Arretierungselemente beim Kontakt mit dem Untergrund schräg ausgerichtet sind und dass die Ausrichtung bei den Arretierungselementen eines jeden Paares gegenläufig zueinander ausgerichtet ist. Da die Arretierungselemente beim Bodenkontakt schräg gestellt sind, verkeilen sie sich am Untergrund, wenn der mobile Ständer entgegen der Schrägstellung des jeweiligen Arretierungselements bewegt wird. Bei einer Bewegung in der entgegengesetzten Richtung löst sich zwar die Verkeilung, und das Arretierungselement bietet keinen Schutz gegen ein Wegrollen. Für diesen Schutz aber sorgt das zweite Arretierungselement des Paares, dessen Ausrichtung derjenigen des ersten Arretierungselements entgegengestellt ist.

Auch gegen eine Rotation des mobilen Ständers ist diese Form der Arretierung sehr wirksam, wenn wenigstens zwei, insbesondere parallel zueinander ausgerichtete, Paare von Arretierungselementen an wenigstens zwei Seiten des mobilen Ständers angeordnet sind. Bei einer Drehung des Ständers verkeilen sich dann zwei diagonal gegenüberliegende Arretierungselemente und verhindern eine Rotation. So ist der mobile Ständer sehr gut geeignet für schwere Ampelschirme, deren Schwerpunkt nicht über dem mobilen Ständer liegt und die bei Windstößen vor allem zu einer Drehung um eine durch den mobilen Ständer verlaufende vertikale Achse neigen.

Andere wirksame Konfigurationen sind beispielsweise eine kreuzweise Anordnung zweier Paare, die sich in ihrer Ausrichtung um beispielsweise 90° voneinander unterscheiden, oder eine Anordnung von drei Paaren von Arretierungselementen in Form eines beispielsweise gleichseitigen Dreiecks. Eine sichere Arretierung kann auch dann erfolgen, wenn die Konfiguration nicht streng symmetrisch ist.

In einigen Ausführungsformen sind die Arretierungslemente jeweils an ihrem mit dem Untergrund in Kontakt tretenden Ende mit einer Arretierungsstruktur, insbesondere einem Zahnprofil oder rutschhinderndem Gummiaufsatz oder -belag, versehen.

In Ausführungsformen werden die Arretierungselemente in der Arretierstellung federvorgespannt im Kontakt mit dem Untergrund gehalten. Diese Maßnahme ist vorteilhaft für einen Höhenausgleich bei unebenen Untergründen, da dies im Vergleich zu einer starren Mechanik ein höheres Maß an Flexibilität erlaubt.

Die Arretierungsvorrichtung umfasst in Ausführungsformen einen um eine, insbesondere horizontale, Drehachse drehbar gelagerten Steuerkörper, der zwischen den Arretierungselementen eines Paares angeordnet und mit der Betätigungsvorrichtung derart verbunden ist, dass eine Betätigung der Betätigungsvorrichtung zu einer Drehung des Steuerkörpers um seine Drehachse führt, wobei die beiden Arretierungselemente eines Paares mittels Schub- und Zugverbindungen an relativ zur Drehachse zueinander gegenüberliegenden Anlenkpunkten des Steuerkörpers angelenkt sind. Aufgrund der Anlenkung an relativ zur Drehachse zueinander gegenüberliegenden Anlenkpunkten ergibt sich eine gegenläufige Bewegung, die zu einer gegenläufigen Schwenkrichtung für die beiden mit dem Steuerkörper verbundenen Arretierungselementen führt.

In einer Weiterbildung hierzu sind die Schub- und Zugverbindungen der Arretierungselemente mit dem Steuerkörper jeweils als eine Kombination einer Federzugverbindung und einer starren Schubverbindung ausgeführt, wobei die Federzugverbindung eine Spiralfeder umfasst, deren erstes Ende an einem Befestigungspunkt am Steuerkörper oder an einem mit dem Steuerkörper verbundenen steifen Teil und deren zweites Ende mit dem Arretierungselement jeweils an einem fixen Befestigungspunkt befestigt ist, und die starre Schubverbindung eine steife Verbindungsstange umfasst, deren erstes Ende am Steuerkörper angelenkt ist und deren zweites Ende in einem Langloch im Arretierungselement, das im Wesentlichen in der Richtung einer Erstreckung der Verbindungsstange ausgerichtet ist, verschiebbar angeschlagen ist.

Beim Verschwenken eines Arretierungselements aus der Ruhestellung in die Arretierstellung zieht die Spiralfeder das Arretierungselement soweit herunter, wie der Anschlag der steifen Verbindungsstange im Langloch dies zulässt. Sobald das Arretierungselement in Kontakt mit dem Untergrund tritt, wird durch ein weiteres Zurückziehen der Federzugverbindung die Spiralfeder stärker gespannt, während der Anschlag der steifen Verbindungsstange sich im Langloch verschiebt. Dies kann prinzipiell so weit gehen, bis der Anschlag der steifen Verbindungsstelle das nähere Ende des Langlochs erreicht. Umgekehrt wird beim Verschwenken des Arretierungselements aus der Arretierstellung in die Ruhestellung durch das Schieben der Schub- und Zugverbindung zunächst die Spiralfeder entlastet, bis der Anschlag der steifen Verbindungsstange das ferne Ende des Langlochs erreicht hat und von da an das Arretierungselement aus dem Kontakt mit dem Untergrund löst und in die Ruhestellung schiebt.

Zur Betätigung des Steuerkörpers ist dieser in Ausführungsformen über ein steifes Verbindungselement angelenkt mit der Betätigungsvorrichtung verbunden. So kann eine Schwenkbewegung oder andersartige Bewegung der Betätigungsvorrichtung in eine Drehbewegung des Steuerkörpers umgelenkt werden. Eine typische Bewegungsart für die Betätigungsvorrichtung bei derartigen mobilen Ständern ist eine Schwenkbewegung, wobei eine vertikale Ausrichtung der Betätigungsvorrichtung der Arretierstellung und eine abgewinkelte Ausrichtung der Ruhestellung entspricht.

In einer besonders einfachen Ausführungsform umfasst die Arretierungsvorrichtung eine Zugverbindung mit wenigstens einem flexiblen Zugelement, insbesondere einem Zugseil, einer Zugkette oder einem Zugriemen, welches eine umgelenkte Zugverbindung zwischen der Betätigungsvorrichtung und den Arretierungselementen wenigstens eines Paares von Arretierungselementen herstellt, wobei die Arretierungselemente des Paares von Arretierungselementen jeweils in Gegenrichtung einer Zugbelastung federvorgespannt sind. Dies ist beispielsweise dadurch zu verwirklichen, dass das Zugelement mit seinem ersten Ende mit einem Befestigungspunkt an der Betätigungsvorrichtung verbunden ist und mit seinem zweiten Ende mittelbar oder unmittelbar an einem Arretierungselement, wobei die Umlenkung mittelbar oder unmittelbar am anderen Arretierungselement des Paares von Arretierungselementen erfolgt.

Dieser Fall entspricht einem einfachen Seilzug. Im unbelasteten Fall werden die Arretierungselement durch Zugfedern in einer Position gehalten, während eine Belastung des Zugelements durch Bewegung des Betätigungselements dazu führt, dass die Arretierungselemente entgegen der Federvorspannung ausgelenkt werden. In solchen Ausführungsbeispielen, in denen die Arretierungselemente eines Paares am zum Untergrund weisenden Ende voneinander weg orientiert sind, bewirkt die Federvorspannung, dass die Arretierungselemente nach außen vorgespannt sind, d.h., den Boden nicht berühren, während eine Belastung des Zugelements die Arretierungselemente in Untergrundkontakt bringt. Im umgekehrten Fall, dass die Arretierungselemente an ihren unteren Enden aufeinander zu weisen, zieht die Federvorspannung diese in Kontakt mit dem Untergrund, während die Belastung des Zugelements sie aus dem Untergrundkontakt löst. In beiden Fällen sind die Zugfedern so angeordnet, dass sie die Arretierungselemente voneinander entfernen, während eine Belastung des Zugelements diese aneinander annähert.

Neben ihrer Simplizität hat diese Lösung den weiteren Vorteil, dass in jedem Fall eine sichere Arretierung auch bei unebenem Untergrund sichergestellt wird.

In Ausführungsformen ist vorgesehen, dass eine Schwenkebene der Arretierungselemente parallel zu einer Ausrichtung einer Schwenkebene der Betätigungsvorrichtung ausgerichtet ist. Eine Verschiebung des mobilen Ständers erfolgt meist durch Schieben oder Ziehen an der Betätigungsvorrichtung, so dass eine Ausrichtung der Schwenkebenen der Arretierungselemente in dieser Richtung zu einem besonders stabilen Haltezustand führt.

Die Betätigungsvorrichtung umfasst erfindungsgemäß ein Betätigungselement, insbesondere eine Betätigungsstange, die in einer mit dem Rollenträger verbundenen Haltevorrichtung zwischen einer ersten Endpositionen und einer zweiten Endposition um eine Schwenkachse der Betätigungsvorrichtung schwenkbar gelagert ist, die der Ruhestellung und der Arretierstellung der Arretierungsvorrichtung entsprechen, wobei die Haltevorrichtung ausgebildet ist, einer Bewegung des Betätigungselements aus der ersten Endposition in die zweite Endposition und umgekehrt eine zu überwindende Kraftwirkung entgegenzusetzen. Typische Endpositionen einer solchen schwenkbaren Betätigungsstange bzw. Betätigungsvorrichtung sind eine vertikale und eine demgegenüber deutlich verschwenkte Position, die beispielsweise, aber nicht limitierend, zwischen 30° und 60° von der Vertikalen abweichen kann. Der genannte Winkelbereich ist insbesondere für die Handhabung des mobilen Ständers besonders geeignet.

Weiter ist erfindungsgemäß vorgesehen, dass die Betätigungsvorrichtung an der dem Betätigungselement bezüglich der Schwenkachse der Betätigungsvorrichtung gegenüberliegenden Seite ein längserstrecktes Hebelelement mit zwei parallelen und radial zur Schwenkachse der Betätigungsvorrichtung verlaufenden Schenkeln aufweist, welche radial zur Schwenkachse der Betätigungsvorrichtung verlaufende Langlöcher aufweist, in denen ein parallel zur Schwenkachse der Betätigungsvorrichtung ausgerichteter Achsstift verschiebbar gelagert ist, der über eine vorbelastete Spiralfeder mit einem Befestigungspunkt an oder nahe der Schwenkachse der Betätigungsvorrichtung verbunden ist, wobei der Achsstift mit zwei Gleitrollen ausgestattet ist, die auf zwei gleichartig ausgebildeten Abrollkulissen der Haltevorrichtung abrollen, die in den Endpositionen minimale Abstände und in einer Position zwischen den Endpositionen einen maximalen Abstand zum Befestigungspunkt aufweisen. Diese etwas aufwendiger herzustellende Haltevorrichtung bietet eine gegenüber der zuvor beschriebenen Variante noch sicherere Führung, da sie weniger Freiheitsgrade der Bewegung zulässt.

Dies wird noch verstärkt, wenn die Abrollkulissen in Ausführungsformen seitliche Begrenzungsstrukturen aufweisen, die die Gleitrollen an einem seitlichen Wegrutschen hindern.

Außerdem ist in Ausführungsformen zumindest ein Gewicht am Rollenträger, insbesondere lösbar, befestigbar oder befestigt, so dass der mobile Ständer für verschieden schwere Lasten tauglich gemacht werden kann.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1 a)-c): ein erstes Ausführungsbeispiel eines mobilen Ständers,
- Fig. 2 a), b): ein nicht erfindungsgemäßes Beispiel eines mobilen Ständers,
- Fig. 3: Details einer Haltevorrichtung des nicht erfindungsgemäßen Beispiels,
- Fig. 4: Details einer erfindungsgemäßen Haltevorrichtung,
- Fig. 5: ein Hebelelement einer Haltevorrichtung gemäß Fig. 4,
- Fig. 6: das Hebelelement aus Fig. 5 mit einer Spiralfeder,
- Fig. 7: eine Prinzipzeichnung einer Umlenkmechanik mit Steuerkörper sowie
- Fig. 8: eine Prinzipzeichnung einer Umlenkmechanik mit einer Zugverbindung und einem flexiblen Zugelement.

In den Zeichnungen sind jeweils gleiche oder gleichartige Elemente und/oder Teile mit denselben Bezugsziffern versehen, so dass von einer erneuten Vorstellung jeweils abgesehen wird.

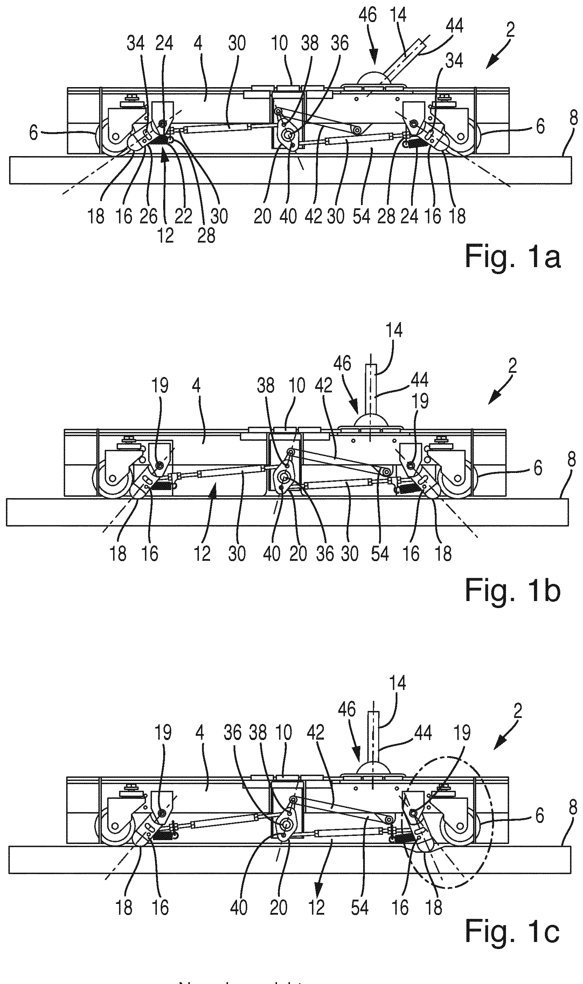

Fig. 1 zeigt in den Teilbildern a) bis c) ein erstes Ausführungsbeispiel eines mobilen Ständers 2, beispielsweise eines mobilen Sonnenschirmständers, der auf einem Untergrund 8 steht. Der mobile Ständer 2 ruht dabei auf Rollen 6, die an einem Rollenträger 4 des mobilen Ständers 2 drehbar befestigt sind und ein Verschieben und Drehen des mobilen Ständers 2 in jede Richtung erlauben. An der Oberseite des Rollenträgers 4 ist eine Aufnahme 10 für einen zu haltenden Gegenstand, beispielsweise einen Sonnenschirm, angeordnet, in die beispielsweise eine Stange eines Sonnenschirms oder eines anderen Gegenstandes eingesetzt werden kann, oder die mit einer entsprechenden Halterung versehen werden kann.

Das Gewicht des Ständers 2 und des zu haltenden Gegenstandes lastet in jeder Situation auf den Rollen 6. Um zu verhindern, dass der mobile Ständer 2 ungewollt wegfährt oder sich dreht, ist eine Arretierungsvorrichtung 12 vorgesehen. Außerdem ist zur Handhabung und zur Betätigung der Arretierungsvorrichtung 12 eine Betätigungsvorrichtung 14, beispielsweise in Form eines Betätigungselements 44, in diesem Fall einer Betätigungsstange, vorgesehen.

Die Arretierungsvorrichtung 12 weist Arretierungselemente 16 in Form von schwenkbaren Füßen auf, an deren Enden im gezeigten Ausführungsbeispiel eine Arretierungsstruktur 18, beispielsweise eine Gummierung, vorhanden ist, die im Kontakt mit dem Untergrund 8 rutschhindernd wirkt. Die Arretierungselemente 16 sind jeweils um horizontale Schwenkachsen 19 schwenkbar. Dabei bilden die beiden gezeigten Arretierungselemente 16 ein Paar, innerhalb dessen die beiden Arretierungselemente 16 gegenläufig zueinander verschwenkt werden, also aufeinander zu bzw. voneinander weg.

Im in Fig. 1 a) dargestellten Zustand befinden sich die Arretierungselemente 16 nicht im Kontakt mit dem Untergrund 18. In den Figuren 1 b) und c) sind die Arretierungselemente 16 weiter nach unten verschwenkt und befinden sich im Kontakt mit dem Untergrund 8. Dabei befinden sie sich in einer Schrägstellung, wobei die beiden Arretierungselemente 16 des Paares in zueinander entgegengesetzter Ausrichtung schräg gestellt sind. Dies führt dazu, dass bei einer potentiellen Bewegung des mobilen Ständers 2 nach links das im Ausführungsbeispiel der Fig. 1 links dargestellte Arretierungselement 16 sich verkeilt, während umgekehrt bei einer potentiellen Bewegung des mobilen Ständers 2 nach rechts sich das rechts dargestellte Arretierungselement 16 verkeilt. Dies führt dazu, dass der mobile Ständer 2 in beiden Richtungen gegen ein Wegrollen abgesichert ist. Bei geeigneter Anordnung von zwei solchen Paaren von Arretierungselementen 16 an zwei Seiten des mobilen Ständers 2 ist dieser auch gegen eine Verdrehung gesichert, da sich in dem Fall zwei diagonal gegenüberliegende Arretierungselemente 16 am Untergrund 8 verkeilen und diese Drehbewegung verhindern.

Während im Ausführungsbeispiel der Fig. 1 dargestellt ist, dass die beiden schräg gestellten Arretierungselemente 16 des Paares voneinander wegweisen, ist es ebenso möglich, dass diese aufeinander zu ausgerichtet sind.

Die Mechanik, die von einer Betätigung der Betätigungsvorrichtung 14 zu einer Verschwenkung der Arretierungselemente 16 führt, ist in den drei Teilfiguren der Fig. 1 ebenso erkennbar. Die Betätigungsvorrichtung 14 wird zwischen einer vertikalen Ausrichtung (Fig. 1 b), 1 c)) und einer schräggestellten Ausrichtung (Fig. 1 a)) verschränkt, wodurch ein steifes Verbindungselement 42 am unteren Ende eines Hebelelements 54 der Betätigungsvorrichtung 14 verschoben wird, welches unterhalb einer Schwenkachse der Betätigungsvorrichtung 14 angeordnet ist. Das steife Verbindungselement 42 ist an seinem anderen Ende an einem Steuerkörper 20 angelenkt, welcher durch die Bewegung des steifen Verbindungselements 42 um eine Drehachse 36 um einen durch die Geometrie der Hebelverhältnisse der Betätigungsvorrichtung 14 und des Steuerkörpers 20 bestimmten Winkel verdreht wird. Dieser Winkel ist in der gezeigten Fig. 1 durch eine gestrichpunktete Linie angedeutet, die durch die Drehachse 36 des Steuerkörpers 20 sowie durch den Anlenkpunkt des steifen Verbindungselements 42 am Steuerkörper 20 verläuft.

Am Steuerkörper 20 sind zwei Anlenkpunkte 38, 40 vorhanden, an denen steife Verbindungsstangen 30 ansetzen, die wiederum an ihrem entgegengesetzten Ende jeweils mit einem der beiden Arretierungselemente 16 des Paares verbunden sind. Die beiden Anlenkpunkte 38, 40 befinden sich an gegenüberliegenden Seiten des Steuerkörpers 20 relativ zu dessen Drehachse 36. Dies erzeugt eine gegenläufige Bewegung der beiden Arretierungselemente 16.

Um ein Verschwenken der Arretierungselemente 16 sowohl zum Lösen als auch zum Herstellen der Arretierung zu ermöglichen, ist die Verbindung zwischen dem Steuerkörper 20 und jedem der Arretierungselemente 16 als kombinierte Schub- und Zugverbindung ausgebildet. In dem gezeigten Ausführungsbeispiel der Fig. 1 ist die Zugverbindung als Federzugverbindung 22, während die Schubverbindung als steife Schubverbindung mit Langlochanschlag ausgebildet ist. Beiden Verbindungsteilen gemeinsam ist die steife Verbindungsstange 30, die jeweils an einem der beiden Anlenkpunkte 38, 40 des Steuerkörpers 20 angreifen. An einer Stelle der steifen Verbindungsstange 30 befindet sich ein Befestigungspunkt 28 einer Spiralfeder 24. Der gegenüberliegende Befestigungspunkt 26 befindet sich am jeweiligen Arretierungselement 16. Diese Federverbindung erlaubt es, den Steuerkörper 20 weiter zu rotieren, wenn das Arretierungselement 16 bereits in Kontakt mit dem Untergrund 8 getreten ist. Ein weiteres Rotieren des Steuerkörpers führt dann zu einer Spannung der Spiralfeder 24. Da die steife Verbindungsstange 30 am Arretierungselement 16 in einem langen Loch 34 angeschlagen ist, hat dieser steife Teil der Verbindung ein gewisses Spiel. Wenn der Steuerkörper 20 in die entgegengesetzte Richtung gedreht wird, wird die steife Verbindungsstange 30 wieder in die entgegengesetzte Richtung bewegt. Anfangs dieser Bewegung wird die Spiralfeder 24 entlastet und gleitet der Anschlag der steifen Verbindungsstelle 30 im Langloch 34 auf dessen entgegengesetztes Ende zu. Das Arretierungselement 16 bewegt sich in dieser Phase noch nicht. In dem Moment, in dem der Anschlag der steifen Verbindungsstelle 30 im langen Loch 34 dessen Ende erreicht hat, wird jede weitere Bewegung der steifen Verbindungsstange 30 nach außen dazu führen, dass das Arretierungselement 16 vom Untergrund 8 gelöst und von diesem weg nach oben verschränkt wird.

In Fig. 1 c) ist gezeigt, wie der derartige flexible Mechanismus auch mit einem unebenen Untergrund 8 zurechtkommt. So ist der Untergrund 8 an der Stelle des links dargestellten Arretierungselements 16 eben, während er an der Stelle des rechts dargestellten Arretierungselements 16 (im Bereich der Ellipse) eine Unebenheit in Form einer Vertiefung aufweist. In diesem Fall rückt das rechte Arretierungselement 16 weiter in die Vertiefung ein, bevor es in Kontakt tritt mit dem Untergrund. Die Kombination aus Federzugverbindung und steifer Schubverbindung mit Langloch ermöglicht diese unterschiedliche Ausrichtung der Arretierungselemente 16 bei gleichzeitig gleicher Betätigungsaktion über den gemeinsamen Steuerkörper 20. Der unterschiedliche Neigungswinkel ist in diesem Bereich durch zwei gestrichpunktete Linien kenntlich gemacht.

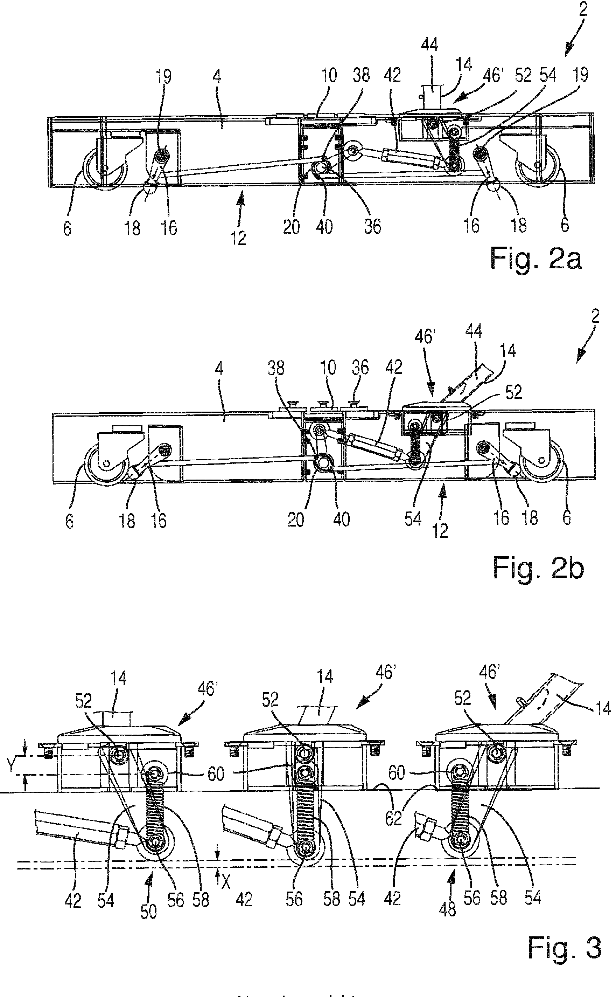

In Fig. 2 a) ist die arretierte Position und in Fig. 2 b) die mobile Position eines nicht erfindungsgemäßen Beispiels eines mobilen Ständers 2 dargestellt, das sich in einigen Details von den ersten Ausführungsbeispielen unterscheidet. So ist die Schub- und Zugverbindung zwischen dem Steuerkörper 20 und den Arretierungselementen 16 vollständig starr ausgeführt und auch der Betätigungsmechanismus ist etwas anders ausgeführt. Dieser ist in Fig. 3 in näherem Detail einer entsprechenden Haltevorrichtung 46' dargestellt, und zwar in einer arretierten Endposition 40 mit vertikaler Ausrichtung der Betätigungsvorrichtung 14 (linkes Teilbild), in einer Zwischenposition (mittleres Teilbild) und in einer Endposition 48 mit aufgehobener Arretierung und Schrägstellung der Betätigungsvorrichtung 14 (rechtes Teilbild).

Auch in diesem Beispiel ist die Betätigungsvorrichtung 14 über eine Schwenkachse 52 schwenkbar mit einem Hebelelement 54 verbunden, dass sich unterhalb der Schwenkachse 52 befindet. An seinem unteren Ende ist das Hebelelement 54 an einem Anlenkpunkt 56 mit einem steifen Verbindungselement 42 angelenkt verbunden. Ebenfalls an dem Anlenkpunkt 56 setzt eine Spiralfeder 58 an, die nach oben ausgerichtet ist und mit einer Gleitrolle 60 endet, welche auf einer ebenen Gleitfläche 62 bzw. Abrollfläche aufsitzt und dort abrollt. Das Hebelelement 54 ist derart gegenüber dem Betätigungselement 44 bzw. der Betätigungsvorrichtung 14 abgewinkelt, dass der Anlenkpunkt 56 in den beiden Endpositionen 48, 50 links und rechts von der Vertikalen unterhalb der Schwenkachse 52 angeordnet ist. Da der Anlenkpunkt 56 im Lauf des Verschwenkens eine Bewegung entlang eines Kreisumfangs um die Schwenkachse 52 vollzieht, ist der Abstand zwischen dem Anlenkpunkt 56 und der Gleitfläche 60 in diesen beiden Endpositionen 48, 50 minimal, während in der Zwischenposition der Abstand größer ist. Diese Differenz ist in Fig. 3 mit X zwischen zwei gestrichelten Linien kenntlich gemacht. In der Zwischenposition ist die Auslenkung der Spiralfeder 54 daher größer als in den Endpositionen 48, 50. Es muss daher eine Federkraft überwunden werden, um von einer Endposition in die andere zu gelangen. Dies stabilisiert den Mechanismus in den beiden Endpositionen 48, 50 bei gleichzeitig geringem konstruktivem Aufwand. Für einen sicheren Lauf sollte darauf geachtet werden, dass die Gleitfläche 62 eben ist und die Gleitrolle 60 leichtgängig ist.

Gleichzeitig ist darauf zu achten, dass zwischen der Schwenkachse 52 und der Achse der Gleitrolle 60 ein ausreichender Abstand Y vorhanden ist, damit letztere sich unter der Schwenkachse hindurch bewegen kann.

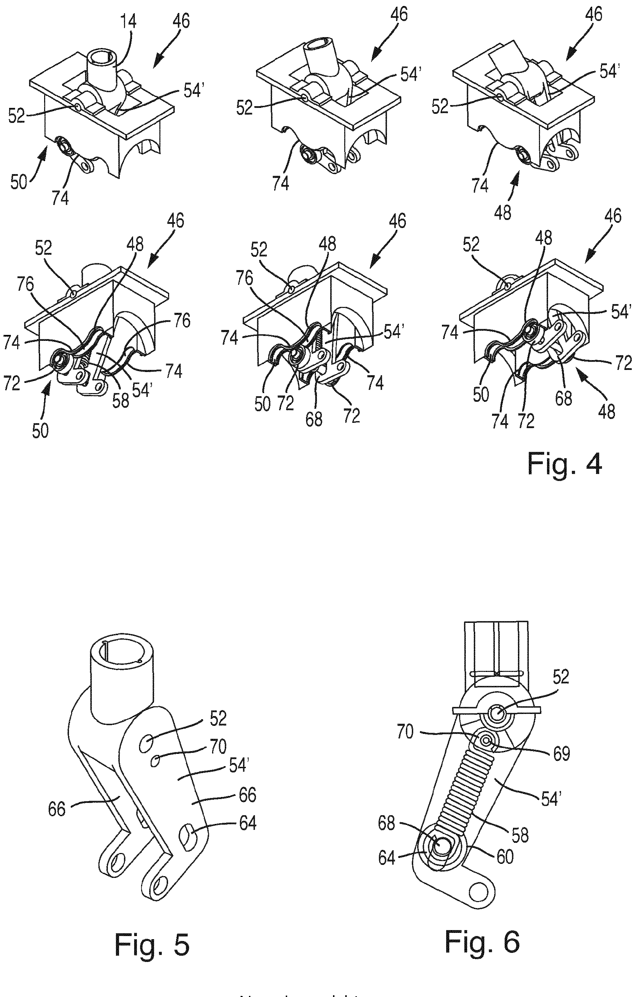

In Fig. 4 ist ein erfindungsgemäßes Ausführungsbeispiel einer Haltevorrichtung 46 dargestellt, und zwar in einer Schrägperspektiven von oben (obere Reihe) beziehungsweise von unten (untere Reihe), und, von links nach rechts verlaufend jeweils in der arretierten Endposition 50, einer Zwischenposition und der gelösten Endposition 48.

Die Haltevorrichtung 46 umfasst ein Gehäuse, welches Augen bzw. Aufnahmen für die Schwingachse 52 der Betätigungsvorrichtung 14 aufweist, sowie am unteren Ende gekurvte Abrollkulissen 74. Wie insbesondere in der unteren Reihe der Fig. 4 zu sehen ist, laufen auf diesen Abrollkulissen 74 Gleitrollen 72 ab, die in einem zweischenkligen Hebelelement 54' in zwei parallelen, vertikal ausgerichteten Langlöchern 64 gehalten werden. Das Hebelelement 54' mit den beiden Schenkeln 66 ist in Fig. 5 perspektivisch besser zu sehen, ebenso wie ein Durchgangsloch für die Schwingachse 52 und die Langlöcher 64, die bezüglich der Schwenkachse 42 radial nach außen ausgerichtet sind.

Ebenfalls ist in Fig. 5 ein Befestigungspunkt 70 dargestellt, dessen Funktion in der Darstellung der Fig. 6 klar wird. So ist zwischen den Schenkeln 66 des Hebelelements 54' eine Spiralfeder 58 angeordnet, die mit zwei Achsstiften 68, 69 einerseits ortsfest am Befestigungspunkt 70 und andererseits radial verschiebbar in den Langlöchern 64 gehalten wird. Die Spiralfeder 58 ist vorgespannt. Der durch die Langlöcher 64 ragende Achsstift 68 ist außerhalb der beiden Schenkel 66 jeweils mit Gleitrollen 60 versehen, die, wie in Fig. 4 gezeigt, auf den Abrollkulissen 74 der Haltevorrichtung abrollen.

In den beiden Endpositionen 48, 50, bewegen sich die Gleitrollen 60 innerhalb der Langlöcher 64 aufgrund der zurückgenommenen Form der Abrollkulissen 74 auf die Schwenkachse 52 zu und entlasten dadurch die Spiralfeder 58. Zwischen den beiden Endposition 48, 50 weisen die Abrollkulissen 74 einen nach unten ausgebuchteten Abschnitt auf, welcher dazu führt, dass die Spiralfeder 58 gestreckt wird. Dem setzt die Spiralfeder 58 ihre Federkraft entgegen, sodass ein Verschwenken des Betätigungselements bzw. der Betätigungsvorrichtung 14 nur entgegen der Federkraft möglich ist. Dadurch wird die Mechanik in den Endpositionen 48, 50 gehalten. Aufgrund der Ausführung mit den Langlöchern 64 weist diese Mechanik nur den Bewegungsfreiheitsgrad des Verschwenkens um die Schwenkachse 52 auf, sodass wohldefinierte Endpositionen 48, 50 vorhanden sind. Zusätzlich sind die Abrollkulissen 74 jenseits der Endpositionen 48, 50 so gebogen, dass ein weiteres Verschwenken dadurch verhindert wird, dass die Gleitrollen 60 gegen die Endkonturen der Abrollkulissen 74 stoßen, über die sie nicht hinaus bewegt werden können.

Die Abrollkulissen 74 haben in der in Fig. 4 gezeigten Ausführungsform außerdem seitliche Begrenzungsstrukturen 76, die eine seitliche Führung der Gleitrollen 60 darstellen und somit verhindern, dass diese seitlich abrutschen können.

In der in Fig. 4 gezeigten Ausführungsform sind die Abrollkulissen 74 in Bezug auf die Endpositionen 48, 50 symmetrisch ausgebildet. Dies ist nicht zwingend, denn in anderen Ausführungsformen kann es wünschenswert sein, beispielsweise in Bezug auf eine Endposition eine größere Kraft entgegenzusetzen als bei der anderen Endposition. So kann es beispielsweise wünschenswert sein, dass die Kraft, die zum Verlassen der Arretierungsposition notwendig ist, größer ist als die Kraft, die dem Verlassen der mobilen Stellung entgegensetzt wird. In dem Fall werden die Abrollkulissen 74 asymmetrisch ausgestaltet, wobei auf der Seite der Endposition 50, in der die Arretierungsvorrichtung in die Arretierstellung gebracht wird, eine steilere Steigung zu überwinden ist als in der anderen Endposition 48.

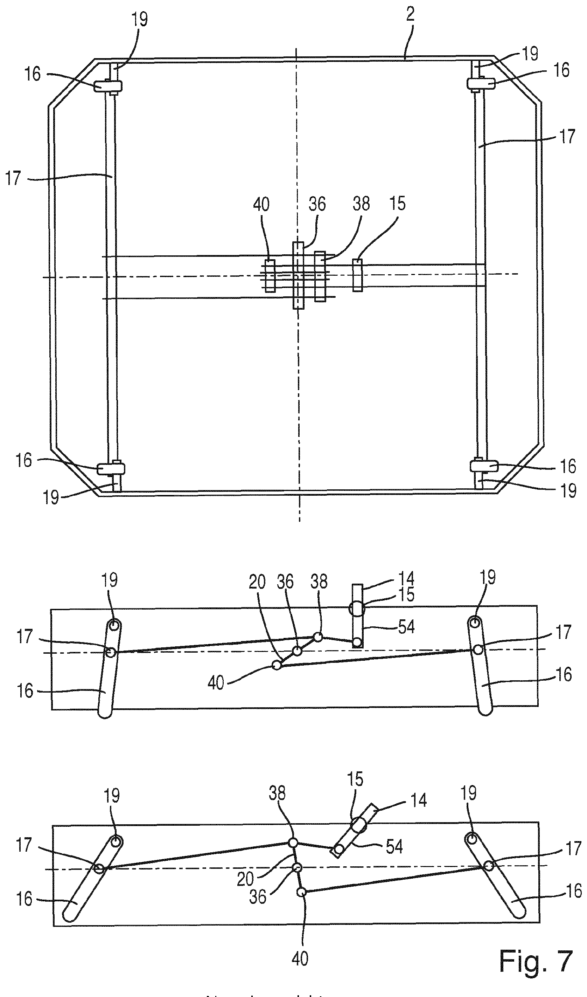

Fig. 7 ist eine Prinzipzeichnung einer Umlenkmechanik mit einem Steuerkörper 20, die im Wesentlichen den Ausführungsbeispielen der Figuren 1 und 2 entspricht. Die obere Darstellung ist eine Draufsicht, während die beiden unteren Darstellungen seitliche Ansichten in verschiedenen Verschwenkungspositionen sind. Es wird deutlich, dass das Schwenklager 15 der Betätigungsvorrichtung 14 ein ortsfestes Lager ist, ebenso wie die Schwenkachsen 19 der Arretierungselemente 16 sowie die Drehachse 36 des Steuerkörpers 20. Jegliche Schwenkbewegung der Betätigungsvorrichtung 14 wird über die starre Umlenkmechanik mit dem Steuerkörper 20 über Verbindungsstangen in gegenläufige Schwenkbewegungen der Arretierungselemente 16 umgesetzt.

In Fig. 7 ist ebenfalls dargestellt, dass jeweils zwei Arretierungselemente 16 über eine Verbindungsstange 17 miteinander verbunden sind, so dass die beiden Paare von Arretierungselementen 16 zusammen bewegt werden. Die steifen Verbindungsstangen sind zur Erhöhung der Stabilität und Balance der Mechanik doppelt ausgeführt, mit Ausnahme der Verbindungsstange, die das untere Ende der Betätigungsvorrichtung 14 mit dem oberen Anlenkpunkt 38 des Steuerkörpers 20 verbindet.

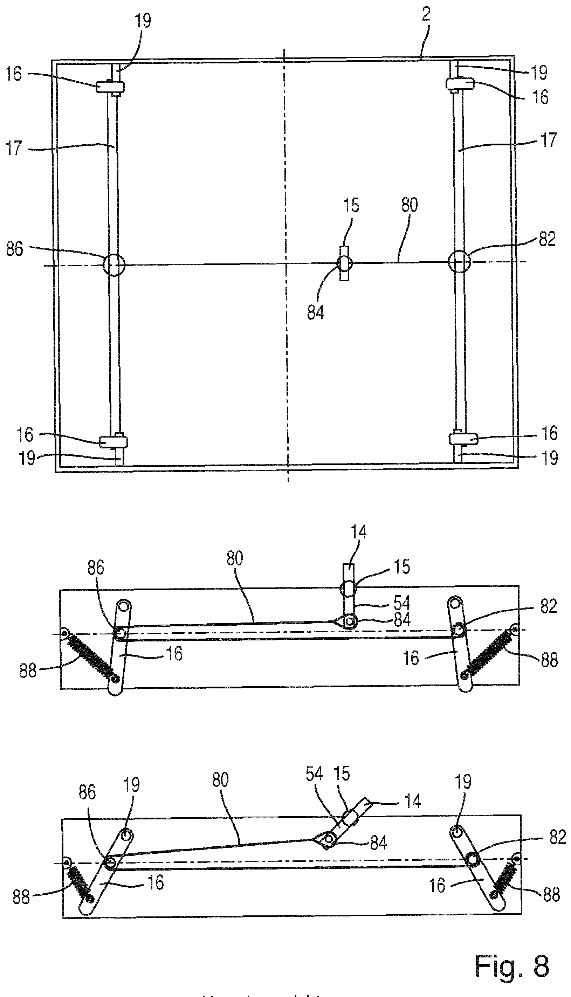

Fig. 8 ist eine Prinzipzeichnung einer Umlenkmechanik mit einer Zugverbindung und einem flexiblen Zugelement 80. Ebenso wie in Fig. 7 ist auch hier die obere Darstellung eine Draufsicht, während die beiden unteren Darstellungen seitliche Ansichten in verschiedenen Verschwenkungspositionen sind. Auch in diesem Ausführungsbeispiel sind die Arretierungselemente 16 unterschiedlicher Paare von Arretierungselementen 16 über Verbindungsstangen 17 miteinander verbunden.

Das flexible Zugelement 80, beispielsweise ein Zugseil, ist mit einem ersten Ende, hier beispielhaft in Form einer Schlaufe, an einem ersten Befestigungspunkt 82 der Betätigungsvorrichtung 14 angebunden. Bei einem Verschwenken der Betätigungsvorrichtung 14 um das Schwenklager 15 bewegt sich der Befestigungspunkt 82 in Gegenrichtung. Das flexible Zugelement 80 wird über eine Umlenkung umgelenkt, die in diesem Fall beispielhaft an der Verbindungsstange der links dargestellten Arretierungselemente 16 angeordnet ist, und führt dann mit seinem zweiten Ende, wieder in Form einer Schlaufe, zu einem zweiten Befestigungspunkt 84 an der Verbindungsstange 17 zwischen den anderen beiden Arretierungselementen 16. Die Zugbewegung wird somit über die Verbindungsstangen 17 an die Arretierungselemente 16 vermittelt. Das Zugelement 80 kann alternativ auch direkt an den Arretierungselementen 16 angreifen, oder es kann mehr als ein Zugelement 80 vorgesehen sein.

Wie die beiden unteren Teilzeichnungen verdeutlichen, ist dann, wenn das Betätigungselement 14 in einer senkrechten Position ist, die Zugverbindung mit dem Zugelement 80 angespannt, die gegenüberliegenden Arretierungselemente 16 werden aufeinander zu bewegt bzw. angespannt. Eine Verschwenkung des Betätigungselements 14 lockert die Zugverbindung und gibt die Arretierungselemente 16 frei. Da diese mit Zugfedern 88 entgegen der Zugrichtung vorgespannt sind, werden die Arretierungselemente 16 aus dem Kontakt mit dem Untergrund und voneinander weggezogen.

Neben ihrer Simplizität hat diese Variante mit der Zugverbindung den weiteren Vorteil, dass sie inhärent einen Ausgleich für unebene Böden bietet.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: mobiler Ständer
- 4: Rollenträger
- 6: Rollen
- 8: Untergrund
- 10: Aufnahme
- 12: Arretierungsvorrichtung
- 14: Betätigungsvorrichtung
- 15: Schwenklager
- 16: Arretierungselement
- 17: Verbindungsstange
- 18: Arretierungsstruktur
- 19: Schwenkachse
- 20: Steuerkörper
- 22: Federzugverbindung
- 24: Spiralfeder
- 26, 28: Befestigungspunkt
- 30: steife Verbindungsstange
- 32: starre Schubverbindung
- 34: Langloch
- 36: Drehachse des Steuerkörpers
- 38, 40: Anlenkpunkt
- 42: steifes Verbindungselement
- 44: Betätigungselement
- 46, 46': Haltevorrichtung
- 48, 50: Endposition
- 52: Schwenkachse der Betätigungsvorrichtung
- 54: Hebelelement
- 56: Anlenkpunkt
- 58: Spiralfeder
- 60: Gleitrolle
- 62: Gleitfläche
- 64: Langloch
- 66: Schenkel
- 68, 69: Achsstift
- 70: Befestigungspunkt
- 72: Gleitrolle
- 74: Abrollkulisse
- 76: seitliche Begrenzungsstruktur
- 80: Zugelement
- 82: erster Befestigungspunkt
- 84: zweiter Befestigungspunkt
- 86: Umlenkung
- 88: Zugfeder

## Patentansprüche

1. Mobiler Ständer (2) für einen zu haltenden Gegenstand, umfassend einen Rollenträger (4) mit mindestens drei Rollen (6), die dazu vorgesehen sind auf einem Untergrund (8) abzurollen, so dass der Ständer (2) mobil ist, eine Aufnahme (10), über die der zu haltende Gegenstand mit dem mobilen Ständer (2) koppelbar ist, eine Arretierungsvorrichtung (12), mit der der Rollenträger (4) gegenüber dem Untergrund (8) ortsfest arretierbar ist, wobei die Arretierungsvorrichtung (12) mit einer Betätigungsvorrichtung (14) verbunden ist, mit der die Arretierungsvorrichtung (12) reversibel zwischen einer Ruhestellung ohne Untergrundkontakt und einer Arretierstellung mit Untergrundkontakt bewegt werden kann, wobei die Arretierungsvorrichtung (12) ein Paar oder mehrere Paare von längserstreckten Arretierungselementen (16) aufweist und die Arretierungselemente (16) des oder jedes Paares durch Betätigung der Betätigungsvorrichtung (14) zueinander gegenläufig aus der Ruhestellung in die Arretierstellung verschwenkbar sind und in der Arretierstellung im Untergrundkontakt schräg und zueinander gegenläufig ausgerichtet sind, wobei die Betätigungsvorrichtung (14) ein Betätigungselement (44), insbesondere eine Betätigungsstange, umfasst, die in einer mit dem Rollenträger (4) verbundenen Haltevorrichtung (46, 46') zwischen einer ersten Endposition (48) und einer zweiten Endposition (50) um eine Schwenkachse (52) der Betätigungsvorrichtung (14) schwenkbar gelagert ist, die der Ruhestellung und der Arretierstellung der Arretierungsvorrichtung (12) entsprechen, wobei die Haltevorrichtung (46, 46') ausgebildet ist, einer Bewegung des Betätigungselements (44) aus der ersten Endposition (48) in die zweite Endposition (50) und umgekehrt eine zu überwindende Kraftwirkung entgegenzusetzen, **dadurch gekennzeichnet, dass** die Betätigungsvorrichtung (14) an der dem Betätigungselement (44) bezüglich der Schwenkachse (52) der Betätigungsvorrichtung (14) gegenüberliegenden Seite ein längserstrecktes Hebelelement (54') mit zwei parallelen und radial zur Schwenkachse (52) der Betätigungsvorrichtung (14) verlaufenden Schenkeln (66) aufweist, welche radial zur Schwenkachse (52) der Betätigungsvorrichtung (14) verlaufende Langlöcher (64) aufweist, in denen ein parallel zur Schwenkachse (52) der Betätigungsvorrichtung (14) ausgerichteter Achsstift (68) verschiebbar gelagert ist, der über eine vorbelastete Spiralfeder (58) mit einem Befestigungspunkt (70) an oder nahe der Schwenkachse (52) der Betätigungsvorrichtung (14) verbunden ist, wobei der Achsstift (68) mit zwei Gleitrollen (72) ausgestattet ist, die auf zwei gleichartig ausgebildeten Abrollkulissen (74) der Haltevorrichtung (46) abrollen, die in den Endpositionen (48, 50) minimale Abstände und in einer Position zwischen den Endpositionen (48, 50) einen maximalen Abstand zum Befestigungspunkt (70) aufweisen.

2. Mobiler Ständer (2) nach Anspruch 1, **dadurch gekennzeichnet, dass** wenigstens zwei, insbesondere parallel zueinander ausgerichtete, Paare von Arretierungselementen (16) an wenigstens zwei Seiten des mobilen Ständers (2) angeordnet sind.

3. Mobiler Ständer (2) nach Anspruch 1 oder 2, **dadurch gekennzeichnet, dass** die Arretierungselemente (16) jeweils an ihrem mit dem Untergrund (8) in Kontakt tretenden Ende mit einer Arretierungsstruktur (18), insbesondere einem Zahnprofil oder rutschhinderndem Gummiaufsatz oder -belag, versehen sind.

4. Mobiler Ständer (2) nach einem der Ansprüche 1 bis 3, **dadurch gekennzeichnet, dass** die Arretierungselemente (16) in der Arretierstellung federvorgespannt im Kontakt mit dem Untergrund (8) gehalten werden.

5. Mobiler Ständer (2) nach einem der Ansprüche 1 bis 4, **dadurch gekennzeichnet, dass** die Arretierungsvorrichtung (12) einen um eine, insbesondere horizontale, Drehachse (36) drehbar gelagerten Steuerkörper (20) umfasst, der zwischen den Arretierungselementen (16) eines Paares angeordnet und mit der Betätigungsvorrichtung (14) derart verbunden ist, dass eine Betätigung der Betätigungsvorrichtung (14) zu einer Drehung des Steuerkörpers (20) um seine Drehachse (36) führt, wobei die beiden Arretierungselemente (16) eines Paares mittels Schub- und Zugverbindungen an relativ zur Drehachse (36) zueinander gegenüberliegenden Anlenkpunkten (38, 40) des Steuerkörpers (20) angelenkt sind.

6. Mobiler Ständer (2) nach Anspruch 5, **dadurch gekennzeichnet, dass** die Schub- und Zugverbindungen der Arretierungselemente (16) mit dem Steuerkörper (20) jeweils als eine Kombination einer Federzugverbindung (22) und einer starren Schubverbindung (32) ausgeführt sind, wobei die Federzugverbindung (22) eine Spiralfeder (24) umfasst, deren erstes Ende an einem Befestigungspunkt (28) am Steuerkörper (20) oder an einem mit dem Steuerkörper (20) verbundenen steifen Teil und deren zweites Ende mit dem Arretierungselement (16) jeweils an einem fixen Befestigungspunkt (26) befestigt ist, und die starre Schubverbindung (32) eine steife Verbindungsstange (32) umfasst, deren erstes Ende am Steuerkörper (20) angelenkt ist und deren zweites Ende in einem Langloch (34) im Arretierungselement (16), das im Wesentlichen in der Richtung einer Erstreckung der Verbindungsstange ausgerichtet ist, verschiebbar angeschlagen ist.

7. Mobiler Ständer (2) nach Anspruch 5 oder 6, **dadurch gekennzeichnet, dass** der Steuerkörper (20) über ein steifes Verbindungselement (42) angelenkt mit der Betätigungsvorrichtung (14) verbunden ist.

8. Mobiler Ständer (2) nach einem der Ansprüche 1 bis 4, **dadurch gekennzeichnet, dass** die Arretierungsvorrichtung (12) eine Zugverbindung mit wenigstens einem flexiblen Zugelement (80), insbesondere einem Zugseil, einer Zugkette oder einem Zugriemen, umfasst, welches eine umgelenkte Zugverbindung zwischen der Betätigungsvorrichtung (14) und den Arretierungselementen (16) wenigstens eines Paares von Arretierungselementen (16) herstellt, wobei die Arretierungselemente (16) des Paares von Arretierungselementen (16) jeweils in Gegenrichtung einer Zugbelastung federvorgespannt sind.

9. Mobiler Ständer nach einem der Ansprüche 1 bis 8, **dadurch gekennzeichnet, dass** eine Schwenkebene der Arretierungselemente (16) parallel zu einer Ausrichtung einer Schwenkebene der Betätigungsvorrichtung (14) ausgerichtet ist.

10. Mobiler Ständer (2) nach einem der Ansprüche 1 bis 9, **dadurch gekennzeichnet, dass** die Abrollkulissen (74) seitliche Begrenzungsstrukturen (76) aufweisen, die die Gleitrollen (60) an einem seitlichen Wegrutschen hindern.

11. Mobiler Ständer (2) nach einem der Ansprüche 1 bis 10, **dadurch gekennzeichnet, dass** zumindest ein Gewicht am Rollenträger (4), insbesondere lösbar, befestigbar oder befestigt ist.

## Claims

1. Mobile stand (2) for an object to be held, comprising a roller carrier (4) with at least three rollers (6) designed to roll on a ground surface (8) so that the stand (2) is mobile, a mount (10) via which the object to be held can be coupled to the mobile stand (2), a locking device (12) by means of which the roller carrier (4) can be locked in position relative to the ground surface (8), the locking device (12) being connected to an operating device (14) by means of which the locking device (12) can be moved reversibly between a rest position without contact with the ground surface and a locking position with contact with the ground surface, wherein the locking device (12) has one pair or several pairs of elongated locking elements (16) and the locking elements (16) of the or each pair can be pivoted in opposite directions relative to each other from the rest position into the locking position by operating the operating device (14) and, in the locking position, in contact with the ground surface, are oriented obliquely and in opposite directions relative to each other, wherein the operating device (14) comprises an operating element (44), in particular an operating lever, which is mounted in a holding device (46, 46') connected to the roller carrier (4) so as to be pivotable about a pivot axis (52) of the operating device (14) between a first end position (48) and a second end position (50), which correspond to the rest position and the locking position of the locking device (12), wherein the holding device (46, 46') is designed to exert a force to be overcome against a movement of the actuating element (44) from the first end position (48) to the second end position (50) and vice versa, **characterised in that** the operating device (14) has, on the side opposite the operating element (44) with respect to the pivot axis (52) of the operating device (14), an elongated lever element (54') with two parallel legs (66) extending radially to the pivot axis (52) of the operating device (14), which has elongated holes (64) extending radially to the pivot axis (52) of the operating device (14), in which an axle pin (68) aligned parallel to the pivot axis (52) of the operating device (14) is slidably mounted, which is connected via a preloaded spiral spring (58) to a fixing point (70) on or near the pivot axis (52) of the operating device (14), wherein the axle pin (68) is equipped with two sliding rollers (72) which roll on two identically designed roller guides (74) of the holding device (46), which at the end positions (48, 50) have minimum distances and, in a position between the end positions (48, 50), have a maximum distance to the fixing point (70).

2. Mobile stand (2) according to claim 1, **characterised in that** at least two pairs of locking elements (16), in particular aligned parallel to each other, are arranged on at least two sides of the mobile stand (2).

3. Mobile stand (2) according to claim 1 or 2, **characterised in that** the locking elements (16) are each provided at their end coming into contact with the ground surface (8) with a locking structure (18), in particular a tooth profile or anti-slip rubber attachment or covering.

4. Mobile stand (2) according to any of claims 1 to 3, **characterised in that**, in the locking position, the locking elements (16) are held in contact with the ground surface (8) by spring bias.

5. Mobile stand (2) according to one of claims 1 to 4, **characterised in that** the locking device (12) comprises a control body (20) rotatably mounted about a, in particular horizontal, axis of rotation (36), which is arranged between the locking elements (16) of a pair and is connected to the operating device (14) in such a way that that operation of the operating device (14) causes the control body (20) to rotate about its axis of rotation (36), wherein the two locking elements (16) of a pair are articulated by means of push and pull connections at link points (38, 40) of the control body (20) which are opposite each other relative to the axis of rotation (36).

6. Mobile stand (2) according to claim 5, **characterised in that** the push and pull connections of the locking elements (16) to the control body (20) are each designed as a combination of a spring-tension connection (22) and a rigid push connection (32), wherein the spring-tension connection (22) comprises a spiral spring (24), the first end of which is fixed at a fixing point (28) on the control body (20) or on a rigid part connected to the control body (20) and the second end of which is fixed to the locking element (16) at a fixed fixing point (26), and the rigid push connection (32) comprises a rigid connecting rod (32), the first end of which is articulated on the control body (20) and the second end of which is pivotally mounted in a long slot (34) in the locking element (16), which is aligned substantially in the direction of an extension of the connecting rod.

7. Mobile stand (2) according to claim 5 or 6, **characterised in that** the control body (20) is connected to the operating device (14) in an articulated manner via a rigid connecting element (42).

8. Mobile stand (2) according to one of claims 1 to 4, **characterised in that** the locking device (12) comprises a pull connection with at least one flexible pull element (80), in particular a pull cable, a pull chain or a pull strap, which establishes a deflected pull connection between the operating device (14) and the locking elements (16) of at least one pair of locking elements (16), wherein the locking elements (16) of the pair of locking elements (16) are each spring-biased in the opposite direction to a pull load.

9. Mobile stand according to one of claims 1 to 8, **characterised in that** a pivot plane of the locking elements (16) is aligned parallel to an orientation of a pivot plane of the operating device (14).

10. Mobile stand (2) according to one of claims 1 to 9, **characterised in that** the roller guides (74) have lateral limiting structures (76) which prevent the sliding rollers (60) from slipping sideways.

11. Mobile stand (2) according to any of claims 1 to 10, **characterised in that** at least one weight can be attached or is attached to the roller carrier (4), in particular in a releasable manner.

## Revendications

1. Support mobile (2) pour un objet à maintenir, comprenant un support à roulettes (4) avec au moins trois roulettes (6) qui sont prévues pour rouler sur une base (8) de manière à ce que le support (2) soit mobile, un logement (10) par lequel l'objet à maintenir est apte à être relié au support mobile (2), un dispositif de blocage (12) permettant de bloquer le support à roulettes (4) en position fixe par rapport à la base (8), le dispositif de blocage (12) étant relié à un dispositif d'actionnement (14) permettant de déplacer le dispositif de blocage (12) de manière réversible entre une position de repos sans contact avec la base et une position de blocage avec contact avec la base, le dispositif de blocage (12) comportant une ou plusieurs paires d'éléments de blocage (16) s'étendant longitudinalement, et les éléments de blocage (16) de la paire ou de chaque paire étant aptes à être pivotés en sens inverse l'un par rapport à l'autre de la position de repos à la position de blocage par actionnement du dispositif d'actionnement (14) et étant orientés obliquement en contact avec la base et orientés en sens inverse les uns par rapport aux autres, le dispositif d'actionnement (14) comprenant un élément d'actionnement (44), en particulier une tige d'actionnement, qui est monté de manière pivotante dans un dispositif de retenue (46, 46') relié au support à roulettes (4) entre une première position d'extrémité (48) et une deuxième position d'extrémité (50) autour d'un axe de pivotement (52) du dispositif d'actionnement (14), qui correspondent à la position de repos et à la position de blocage du dispositif de blocage (12), le dispositif de retenue (46, 46') étant conçu de manière à s'opposer à un mouvement de l'élément d'actionnement (44) de la première position d'extrémité (48) à la deuxième position d'extrémité (50) et inversement, en opposant une force à surmonter, **caractérisé en ce que** le dispositif d'actionnement (14) comprend, sur le côté opposé à l'élément d'actionnement (44) par rapport à l'axe de pivotement (52) du dispositif d'actionnement (14), un élément allongé (54') formant levier avec deux branches (66) parallèles et s'étendant radialement par rapport à l'axe de pivotement (52) du dispositif d'actionnement (14), qui présente des trous oblongs (64) s'étendant radialement par rapport à l'axe de pivotement (52) du dispositif d'actionnement (14), dans lesquels est montée de manière déplaçable une broche (68) formant axe orientée parallèlement à l'axe de pivotement (52) du dispositif d'actionnement (14), qui est reliée par un ressort spiral précontraint (58) à un point de fixation (70) situé sur ou à proximité de l'axe de pivotement (52) du dispositif d'actionnement (14), la broche formant axe (68) étant équipée de deux galets de roulement (72) qui roulent sur deux guides de roulement (74) de même conception que ceux du dispositif de retenue (46), qui, par rapport au point de fixation (70), présentent des distances minimales dans les positions d'extrémité (48, 50) et une distance maximale dans une position située entre les positions finales (48, 50).

2. Support mobile (2) selon la revendication 1, **caractérisé en ce qu'**au moins deux paires d'éléments de blocage (16), en particulier orientées de façon parallèle entre elles, sont agencées sur au moins deux côtés du support mobile (2).

3. Support mobile (2) selon la revendication 1 ou la revendication 2, **caractérisé en ce que** les éléments de blocage (16) sont pourvus, à leur extrémité venant en contact avec la base (8), d'une structure de blocage (18), en particulier d'un profil denté ou d'un embout ou revêtement en caoutchouc antidérapant.

4. Support mobile (2) selon l'une des revendications 1 à 3, **caractérisé en ce que** les éléments de blocage (16) sont maintenus en contact avec la base (8) dans la position de blocage par une force élastique.

5. Support mobile (2) selon l'une des revendications 1 à 4, **caractérisé en ce que** le dispositif de blocage (12) comprend un corps de commande (20) monté de manière pivotante autour d'un axe de pivotement (36), en particulier horizontal, qui est agencé entre les éléments de blocage (16) d'une paire et qui est relié au dispositif d'actionnement (14) de telle sorte qu'un actionnement du dispositif d'actionnement (14) entraîne une rotation du corps de commande (20) autour de son axe de rotation (36), les deux éléments de blocage (16) d'une paire étant articulés au moyen de liaisons de poussée et de traction sur des points d'articulation (38, 40) du corps de commande (20) qui sont opposés l'un à l'autre par rapport à l'axe de rotation (36).

6. Support mobile (2) selon la revendication 5, **caractérisé en ce que** les liaisons de poussée et de traction des éléments de blocage (16) avec le corps de commande (20) sont chacune réalisées sous la forme d'une combinaison d'une liaison à ressort (22) et d'une liaison de poussée rigide (32), la liaison à ressort (22) comprenant un ressort spiral (24) dont la première extrémité est fixée à un point de fixation (28) sur le corps de commande (20) ou sur une partie rigide reliée au corps de commande (20) et dont la deuxième extrémité est fixée à l'élément de blocage (16) respectivement en un point de fixation fixe (26), et la liaison de poussée rigide (32) comprend une tige de liaison rigide (32) dont la première extrémité est articulée sur le corps de commande (20) et dont la deuxième extrémité est montée de manière coulissante dans un trou oblong (34) dans l'élément de blocage (16), qui est orienté essentiellement dans la direction d'une extension de la tige de liaison.

7. Support mobile (2) selon la revendication 5 ou la revendication 6, **caractérisé en ce que** le corps de commande (20) est relié au dispositif d'actionnement (14) par l'intermédiaire d'un élément de liaison rigide (42).

8. Support mobile (2) selon l'une des revendications 1 à 4, **caractérisé en ce que** le dispositif de blocage (12) comprend une liaison par traction avec au moins un élément de traction flexible (80), en particulier un câble de traction, une chaîne de traction ou une courroie de traction, qui établit une liaison de traction déviée entre le dispositif d'actionnement (14) et les éléments de blocage (16) d'au moins une paire d'éléments de blocage (16), les éléments de blocage (16) de la paire d'éléments de blocage (16) étant chacun sollicités par ressort dans une direction opposée à une contrainte de traction.

9. Support mobile (2) selon l'une des revendications 1 à 8, **caractérisé en ce qu'**un plan de pivotement des éléments de blocage (16) est aligné parallèlement à une orientation d'un plan de pivotement du dispositif d'actionnement (14).

10. Support mobile (2) selon l'une des revendications 1 à 9, **caractérisé en ce que** les guides de roulement (74) présentent des structures de limitation latérales (76) qui empêchent les galets de roulement (60) de glisser latéralement.

11. Support mobile (2) selon l'une des revendications 1 à 10, **caractérisé en ce qu'**au moins un poids est fixé, en particulier de manière amovible, sur le support à roulettes (4).
